# EUROPEAN PATENT SPECIFICATION

(11) **EP 3 826 459 B1**
(45) Date of publication and mention of the grant of the patent: **16.04.2025**
(21) Application number: 19867665.2
(22) Date of filing: 24.09.2019
(51) Int. Cl.: A01K 61/60, A01K 61/00, A01K 63/00, B63B 3/02

(54) **MODULAR FLOATATION COLLAR FOR AQUACULTURE APPLICATIONS**
MODULARER SCHWIMMKRAGEN FÜR ANWENDUNGEN IN DER AQUAKULTUR
COLLIER DE FLOTTAISON MODULAIRE POUR APPLICATIONS D'AQUACULTURE

(30) Priority: 24.09.2018 US 201862735832 P
(43) Date of publication of application: 02.06.2021
(73) Proprietor: Poseidon Ocean Systems Ltd., Campbell River BC V9W 3M7 (CA)
(72) Inventor: CLARKE, Mathew Stephen, Campbell River, British Columbia V9W 4R9 (CA); FLEMING, Jeffrey, Campbell River, British Columbia V9W 4R9 (CA)
(74) Representative: Murgitroyd & Company
(86) International application number: PCT/CA2019/051367
(87) International publication number: WO 2020/061693

(56) References cited:
- WO-A1-03/009679
- WO-A1-2013/173936
- WO-A1-2013/182187
- WO-A1-2013/182187
- US-A- 4 928 617
- US-A- 5 732 649
- US-A1- 2016 281 770

## Description

### BACKGROUND

### Technical Field

The present disclosure relates to a modular floatation collar for aquaculture applications.

### Description of the Related Art

United States Patent No. 4,886,015 which issued on December 12, 1989, to Ochs discloses a modular marine floatation collar for aquaculture applications. Component collar segments are sealed by bulkheads including a connecting flange. Standard component collar segments may be assembled into a desired configuration by flange-to-flange connection of adjacent collar segments. A plurality of elongate tubular members having arcuate recesses conforming to the outer perimeters of supporting collar segments are arranged transversely atop the collar assembly so as to provide for the construction of an elevated walkway.

International Patent Application Publication No. WO/2013/182187 to Schröer discloses a support module (2) for placing in a body of water. The support module comprises at least one float (3) and securing means (5) for at least indirectly maintaining, on the at least one float, a breeding pond (22) used to receive fish which are to be breed and/or other aquatic creatures for breeding. A volume and/or weight of the at least one float is measured such that the support module floats in the body of water. A plurality of floats (3) and a support frame (4) are provided. The plurality of floats are secured to the support frame by fixing means (7) and the support frame comprises securing means (5) for maintaining the breeding pond and connecting means (6) for connecting the support module (2) to an adjacent constructional unit.

International Patent Application Publication No. WO 2013/173936 A1 to Sanchez discloses a system that incorporates the additional connection and buoyancy means necessary for the use of rigid, metallic and/or high-weight meshes or nets, for rafts and/or cages used in the farming, keeping, confining or grouping-together of hydrobiological species. The aforesaid may achieved by means of a bracket, which may allow the incorporation of the necessary buoyancy and connection elements into this type of mesh. This system has two formats, namely one that incorporates the extra buoyancy and connection components for this type of mesh in a single unit, and another designed to provide independent buoyancy and connection for this type of mesh, for use in the case of existing rafts and/or cages.

International Patent Application Publication No. WO 2003/009679 A1 to Kolberg et al. discloses a fish cage with a flotation collar (1) and a net (2). The floatation collar (1) comprises an elongate, parallelly arranged, substantially straight floatation pipes (3) which are closed or sealed. The floatation pipes (3) are interconnected sideways by means of brackets (5), and corner elements (7) having at least two vertical sides. The corner elements (7) are tied together by means of chains/wires or the like in order to tensioning the floatation collar together and in order to distribute the forces. The corner elements (7) are provided with sealed connecting end pieces (9) in order to plug the floating pipes (3).

United States Patent No. 4928617 to Meriwether disclosed a modular float drum assembly for use in supporting a floating structure. The modular float drum assembly includes at least two one-piece, plastic molded float drum modules. Each drum module has a top wall, a bottom wall and contiguous first, second, third and fourth side walls extending between said top and bottom walls to define a buoyant enclosure contained therein. The modular float drum assembly includes rigidizing means integrally formed in each module to rigidize each module against deformation. The rigidizing means including a generally flat first wall segment contiguous with said top wall, a generally flat second wall segment spaced a distance away from said first wall segment and contiguous with one of said side walls, and an end wall segment interconnecting said first wall segment with said second wall segment. The first and second wall segments having essentially identical openings formed therein and aligned with one another. An interconnecting wall segment extends about at least a portion of the peripheral edge of said openings and also interconnects said first and second wall segments whereby a double wall construction rigidizes said module when fasteners securing said module to said floating structure are applied through said openings. The modular float drum assembly includes module securing means formed in one of the side walls of each module for releasably joining one module to another module in an aligned relationship where the modules are in side-by-side physical contact with one another.

### SUMMARY OF THE DISCLOSURE

It is an object of the present disclosure to provide an improved modular floatation collar for aquaculture applications.

There is accordingly provided a segment for a modular floatation collar. The segment comprises a frame having a recessed compartment and a removable decking covering the recessed compartment. There is a plurality of rigging hardpoints disposed along the frame. A universal connection at each end of the frame allows the segment to be connected to an adjacent segment either linearly along a common axis, or orthogonally at a right angle. The rigging hardpoints may be disposed along a centerline of the frame. The segment may further include a plurality of installation hardpoints disposed along the frame. The frame may be mounted on a floatation unit. The floatation unit may be a plurality of spaced-apart, parallel lengths of pipe.

There is also provided a modular floatation collar comprising a segment including a frame having a recessed compartment and a removable decking covering the recessed compartment. There is a plurality of rigging hardpoints disposed along the frame. A universal connection at each end of the frame allows the segment to be connected to an adjacent segment either linearly along a common axis, or orthogonally at a right angle. The rigging hardpoints may be disposed along a centerline of the frame. The segment may further include a plurality of installation hardpoints disposed along the frame. The frame may be mounted on a floatation unit. The floatation unit is a plurality of spaced-apart, parallel lengths of pipe.

The present invention defined in claim 1 provides a modular floatation collar comprising a first segment and a second segment. The first segment of the modular floatation collar has a frame and decking mounted on the frame. The second segment of the modular floatation collar has a frame and decking mounted on the frame. The modular floatation collar also includes a floatation unit. The first segment of the modular floatation collar and the second segment of the modular floatation collar are each mounted on the floatation unit. The floatation unit extends between the first segment of the modular floatation collar and the second segment of the modular floatation collar. The floatation unit may be a plurality of spaced-apart, parallel lengths of pipe. The first segment of the modular floatation collar is connected to the second segment of the modular floatation collar linearly along a common axis. The first segment of the modular floatation collar is connected to the second segment of the modular floatation collar orthogonally at a right angle.

### BRIEF DESCRIPTIONS OF DRAWINGS

The invention will be more readily understood from the following description of the embodiments thereof given, by way of example only, with reference to the accompanying drawings, in which:
Figure 1 is a perspective view of a modular floatation collar for aquaculture applications;
Figure 2 is a fragmentary, perspective view of a segment of the modular floatation collar;
Figure 3 is a fragmentary, perspective view of an end of the segment of the modular floatation collar;
Figure 4 is a perspective view of a first segment of the modular floatation collar connected to a second segment of the modular floatation collar; and
Figure 5 is another perspective view of the first segment of the modular floatation collar connected to the second segment of modular floatation collar.

### DESCRIPTION OF THE SPECIFIC EMBODIMENTS

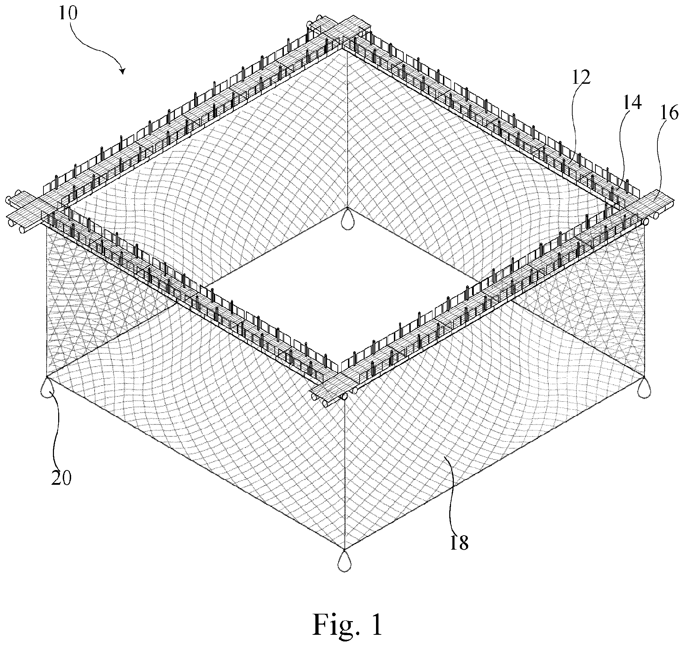

Referring to the drawings and first to Figure 1, a modular floatation collar 10 is shown. The floatation collar 10 may be used in aquaculture applications, for example, as part of an aquaculture pen system. The floatation collar 10 comprises a plurality of segments, for example, a first segment 12, a second segment 14, and a third segment 16. The segments are each configured to be coupled to an adjacent segment either linearly along a common axis, as shown for the first segment 12 and the second segment 14, or orthogonally at a right angle, as shown for the second segment 14 and the third segment 16. This allows for the construction of a floatation collars of various sizes and configurations. In this example, the floatation collar is coupled to a net 18 with weights, for example weight 20, as part of an aquaculture pen system.

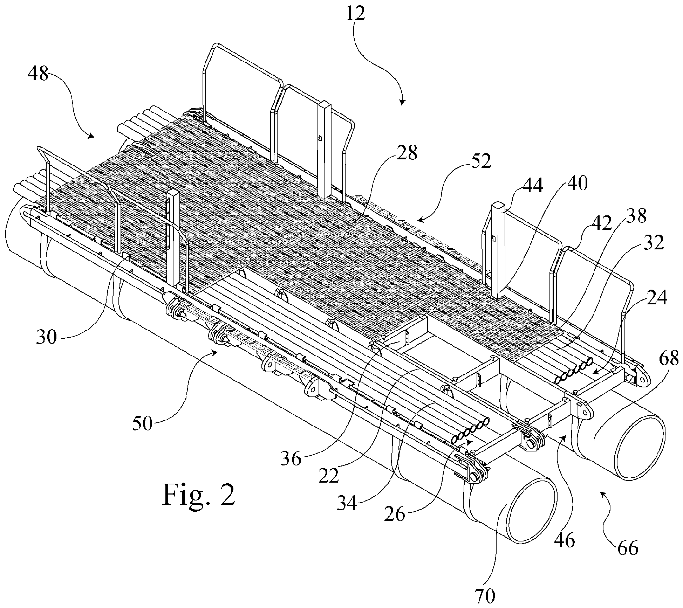

The segments are substantially the same in structure and function. Accordingly, only the first segment 12 is described in detail herein with the understanding that the other segments have substantially the same structure and function in substantially the same manner. The first segment 12 is shown in greater detail in Figure 2. The first segment 12 is generally includes a frame 22 which has a plurality of recessed compartments 24 and 26 which are covered by corresponding decking 28 and 30 mounted on the frame. The recessed compartments 24 and 26 allow for piping 32 and 34 as well as other equipment to be disposed in a work-safe and continuous manner to meet various aquaculture pen system configurations and equipment needs. The decking 28 and 30 is removable, and preferably lightweight, to allow access to the recessed compartments 24 and 26. This allows for easier cleaning and maintenance of the modular floatation collar 10 in the field.

There are rigging hardpoints disposed along a centerline of the first segment 12, for example rigging hard point 36, which allow for weight directed deployment of a net (not shown) and adjustment of the net from the surface. The rigging hardpoints disposed along a centerline of the first segment 12 allow for internal centerline rigging to provide a more stable aquaculture pen system under a variety of loading conditions. The rigging hardpoints along a centerline of the first segment 12 also allow access for easier cleaning and maintenance of the net in the field. There are hardpoints disposed along a longitudinal edge of the segment, for example hardpoint 38 and hardpoint 40, which allow for the installation of rigging, supports, and other accessories. For example, a railing 42 is installed at hardpoint 38 and a support post 44 is installed at hardpoint 40. This mitigates against jury-rigged installations.

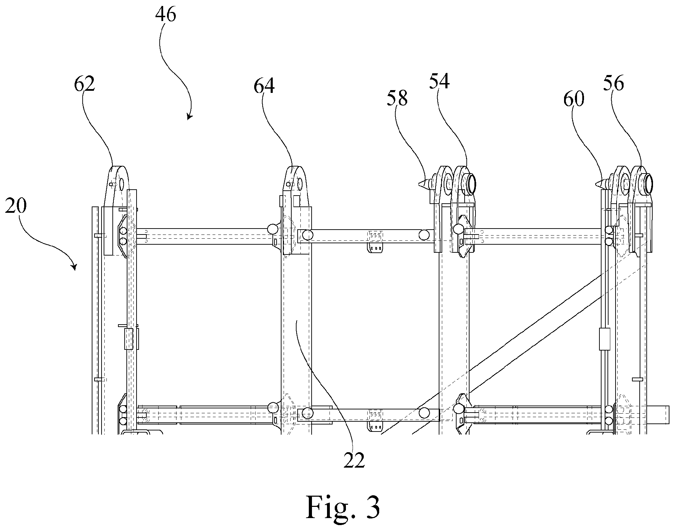

Each end of the first segment 12 is provided with a respective one of universal connectors 46 and 48. Each side of the first segment 12 is also provided with a respective one of the universal connectors 50 and 52. The universal connectors 46, 48, 50 and 52 are substantially the same in structure and function. Accordingly, only one of the universal connectors 46 is described in detail herein with the understanding that the other ones of the universal connectors 48, 50 and 52 have substantially the same structure and function in substantially the same manner. The universal connector 46 is shown in greater detail in Figure 3. The universal connector 46, in this example, includes a pair of clevises 54 and 56, together with corresponding pins 58 and 60, and a pair of tangs 62 and 64. The clevises 54 and 56 are received by corresponding tangs at an end of an adjacent segment when the segments are connected linearly along a common axis. The tangs 62 and 64 are received by corresponding clevises at an end of an adjacent segment when the segments are connected linearly along a common axis. The clevises 54 and 56 are received by corresponding tangs at a side of an adjacent segment when the segments are connected orthogonally at a right angle. The tangs 62 and 64 are received by corresponding clevises at a side of an adjacent segment when the segments are connected orthogonally at a right angle.

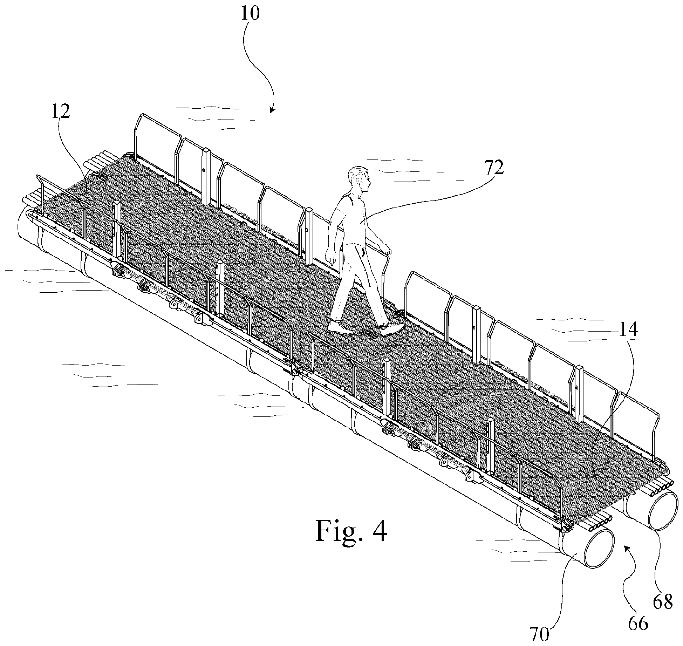

Referring back to Figure 2, the first segment 12 mounted on a continuous floatation unit 66 which, in this example, is a pair of spaced-apart, parallel lengths of pipe 68 and 70 which extend between adjacent segments. The lengths of pipe 68 and 70 may be high density polyethylene (HDPE) pipe, medium density polyethylene (MDPE) pipe, or pipe formed of any other suitable material with rigid and flexible properties. Referring now to Figure 4, as shown for the first segment 12 and the second segment 14, the segments are each mounted on the continuous floatation unit 66 and the continuous floatation unit 66 extends between adjacent ones of the segments. The continuous floatation unit 66 is sufficiently rigid that it will support the weight of a person 72, without flexing, when the person 72 walks along the floatation collar 10. This restricts the segments from becoming offset when the person 72 steps from a segment to an adjacent segment.

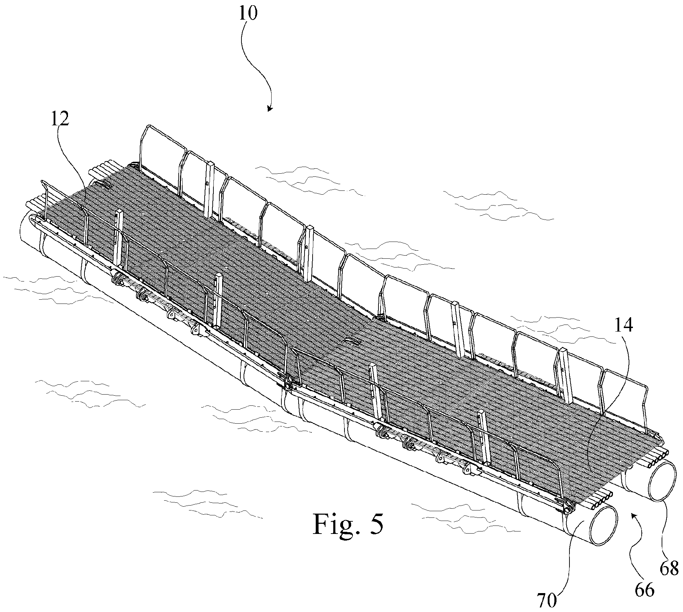

However, the continuous floatation unit 66 may also flex under heavy loads as shown in Figure 5. The continuous floatation unit 66 thereby decreases the amplitude of impact from wave action and dampen the movement across connections between adjacent segments. The continuous floatation unit 66 also secure an edge-free barrier to the net and other components such as weighting.

It will also be understood by a person skilled in the art that many of the details provided above are by way of example only, and are not intended to limit the scope of the invention which is to be determined with reference to the following claims.

## Claims

1. A modular floatation collar (10) for aquaculture applications, the modular floatation collar comprising:
a first segment (12) of the modular floatation collar comprising a frame (22) having a recessed compartment (24, 26) and further comprising a removable decking (28, 30) covering the recessed compartment;
a second segment (14) of the modular floatation collar comprising a frame and further comprising a removable decking covering the recessed compartment;
a floatation unit (66); and
a pivotal connection (46, 48, 50, 52) between said segments around a horizontal pivoting axis, each end of each said segment is provided with a respective one of universal connectors forming said pivotal connection and each side of each said segment is provided with a respective one of the universal connectors to allow the segment to be connected to an adjacent segment either linearly along a common axis or orthogonally at a right angle; **characterized in that**
the first segment of the modular floatation collar and the second segment of the modular floatation collar are both mounted on the floatation unit, and
the floatation unit extends between the first segment of the modular floatation collar and the second segment of the modular floatation collar.

2. The modular floatation collar (10) of claim 1, **characterized in that** the flotation unit (66) is sufficiently rigid that the floatation unit will support a weight of a person (72) without flexing when the person walks along the floatation collar and **characterized in that** the flotation unit flexes under heavy loads.

3. The modular floatation collar (10) as claimed in any one of claims 1 to 2, **characterized in that** the floatation unit (66) comprises a plurality of spaced-apart, parallel lengths of pipe (68, 70).

4. The modular floatation collar (10) of claim 3, **characterized in that** the pipe (68, 70) is made of high density polyethylene (HDPE) pipe, medium density polyethylene (MDPE) pipe.

5. The modular floatation collar (10) as claimed in any one of claims 1 to 4, **characterized in that** each said universal connector (46, 48, 50, 52) comprises a pair of clevises (54, 56) coupled to a first of the segments (12), a pair of tangs (62, 64) coupled to a second of the segments (14), and a pair of corresponding pins (58, 60) which extend through said clevises and said tangs.

6. An aquaculture pen system comprising the modular floatation collar (10) as claimed in any one of claims 1 to 5.

## Patentansprüche

1. Ein modularer Schwimmkragen (10) für Aquakulturanwendungen, wobei der modulare Schwimmkragen Folgendes beinhaltet:
ein erstes Segment (12) des modularen Schwimmkragens, das einen Rahmen (22) beinhaltet, der ein vertieftes Fach (24, 26) aufweist, und ferner einen entfernbaren Belag (28, 30) beinhaltet, der das vertiefte Fach abdeckt;
ein zweites Segment (14) des modularen Schwimmkragens, das einen Rahmen beinhaltet und ferner einen entfernbaren Belag beinhaltet, der das vertiefte Fach abdeckt;
eine Schwimmeinheit (66); und
eine Schwenkverbindung (46, 48, 50, 52) zwischen den Segmenten um eine horizontale Schwenkachse, wobei jedes Ende jedes der Segmente mit einem jeweiligen einen von Universalverbindern bereitgestellt ist, die die Schwenkverbindung bilden, und jede Seite jedes der Segmente mit einem jeweiligen einen der Universalverbinder bereitgestellt ist, um dem Segment zu erlauben, mit einem benachbarten Segment entweder linear entlang einer gemeinsamen Achse oder orthogonal in einem rechten Winkel verbunden zu werden;
**dadurch gekennzeichnet, dass**
das erste Segment des modularen Schwimmkragens und das zweite Segment des modularen Schwimmkragens beide auf der Schwimmeinheit montiert sind, und
die Schwimmeinheit sich zwischen dem ersten Segment des modularen Schwimmkragens und dem zweiten Segment des modularen Schwimmkragens erstreckt.

2. Modularer Schwimmkragen (10) gemäß Anspruch 1, **dadurch gekennzeichnet, dass** die Schwimmeinheit (66) ausreichend starr ist, dass die Schwimmeinheit ein Gewicht einer Person (72) ohne Verbiegen trägt, wenn die Person entlang dem Schwimmkragen läuft, und **dadurch gekennzeichnet, dass** die Schwimmeinheit sich unter starken Belastungen verbiegt.

3. Modularer Schwimmkragen (10) gemäß einem der Ansprüche 1 bis 2, **dadurch gekennzeichnet, dass** die Schwimmeinheit (66) eine Vielzahl von beabstandeten, parallelen Rohrlängen (68, 70) beinhaltet.

4. Modularer Schwimmkragen (10) gemäß Anspruch 3, **dadurch gekennzeichnet, dass** das Rohr (68, 70) aus Rohr aus Polyethylen hoher Dichte (PE-HD), Rohr aus Polyethylen mittlerer Dichte (PE-MD) hergestellt ist.

5. Modularer Schwimmkragen (10) gemäß einem der Ansprüche 1 bis 4, **dadurch gekennzeichnet, dass** jeder des Universalverbinders (46, 48, 50, 52) ein Paar U-Klammern (54, 56), die mit einem ersten der Segmente (12) gekoppelt sind, ein Paar Zungen (62, 64), die mit einem zweiten der Segmente (14) gekoppelt sind, und ein Paar entsprechender Stifte (58, 60), die sich durch die U-Klammern und die Zungen erstrecken, beinhaltet.

6. Ein Aquakulturpferchsystem, das den modularen Schwimmkragen (10) gemäß einem der Ansprüche 1 bis 5 beinhaltet.

## Revendications

1. Un collier de flottaison modulaire (10) pour des applications en aquaculture, le collier de flottaison modulaire comprenant :
un premier segment (12) du collier de flottaison modulaire comprenant un châssis (22) présentant un compartiment en retrait (24, 26) et comprenant en outre un plancher amovible (28, 30) recouvrant le compartiment en retrait ;
un deuxième segment (14) du collier de flottaison modulaire comprenant un châssis et comprenant en outre un plancher amovible recouvrant le compartiment en retrait ;
une unité de flottaison (66) ; et
un raccordement pivotant (46, 48, 50, 52) entre lesdits segments autour d'un axe de pivotement horizontal, chaque extrémité de chaque dit segment étant pourvue d'un raccord respectif parmi des raccords universels formant ledit raccordement pivotant et chaque côté de chaque dit segment étant pourvu d'un raccord respectif parmi les raccords universels pour permettre au segment d'être raccordé à un segment adjacent soit linéairement le long d'un axe commun, soit orthogonalement à un angle droit ;
**caractérisé en ce que**
le premier segment du collier de flottaison modulaire et le deuxième segment du collier de flottaison modulaire sont tous deux montés sur l'unité de flottaison, et
l'unité de flottaison s'étend entre le premier segment du collier de flottaison modulaire et le deuxième segment du collier de flottaison modulaire.

2. Le collier de flottaison modulaire (10) de la revendication 1, **caractérisé en ce que** l'unité de flottaison (66) est suffisamment rigide de sorte que l'unité de flottaison supportera un poids d'une personne (72) sans fléchir lorsque la personne marche sur le collier de flottaison et **caractérisé en ce que** l'unité de flottaison fléchit sous des charges lourdes.

3. Le collier de flottaison modulaire (10) tel que revendiqué dans n'importe laquelle des revendications 1 à 2, **caractérisé en ce que** l'unité de flottaison (66) comprend une pluralité de longueurs de tuyau (68, 70) parallèles et espacées les unes des autres.

4. Le collier de flottaison modulaire (10) de la revendication 3, **caractérisé en ce que** le tuyau (68, 70) est réalisé en tuyau en polyéthylène haute densité (PEHD), en tuyau en polyéthylène moyenne densité (PEMD).

5. Le collier de flottaison modulaire (10) tel que revendiqué dans n'importe laquelle des revendications 1 à 4, **caractérisé en ce que** chaque dit raccord universel (46, 48, 50, 52) comprend une paire de chapes d'attelage (54, 56) couplées à un premier des segments (12), une paire de queues (62, 64) couplées à un deuxième des segments (14), et une paire de chevilles (58, 60) correspondantes qui s'étendent à travers lesdites chapes d'attelage et lesdites queues.

6. Un système d'enclos pour l'aquaculture comprenant le collier de flottaison modulaire (10) tel que revendiqué dans n'importe laquelle des revendications 1 à 5.
